# NOUVEAU FASCICULE DE BREVET EUROPEEN

(11) **EP 0 333 530 B2**
(45) Date de publication et mention de la décision concernant l'opposition: **16.07.1997**
(45) Mention de la délivrance du brevet: 19.11.1992
(21) Numéro de dépôt: 89400430.8
(22) Date de dépôt: 16.02.1989
(51) Int. Cl.: G06K 7/06

(54) **Perfectionnements aux boîtiers connecteurs pour cartes à microcircuits**
Verbindungsgehäuse für Mikroschaltungskarten
Connecting housing for microcircuit cards

(30) Priorité: 18.03.1988 FR 8803500
(43) Date de publication de la demande: 20.09.1989
(73) Titulaire: FRAMATOME CONNECTORS CONNECTRAL, 92150 Suresnes (FR)
(72) Inventeur: Vallois, Michel Albert Emile, F-28000 Chartres (FR)
(74) Mandataire: Fort, Jacques

(56) Documents cités:
- EP-A- 0 234 654
- DE-A- 3 531 318
- DE-A- 3 602 668
- GB-A- 2 198 595
- US-A- 4 236 667
- PATENT ABSTRACTS OF JAPAN vol. 8, no. 14 (P-249)(1451) 21 janvier 1984 & JP-A-58 175079

## Description

La présente invention est relative à des perfectionnements aux boîtiers connecteurs pour cartes à microcircuits.

Le problème général à résoudre à l'aide d'un tel boîtier consiste à relier électriquement les contacts imprimés sur la carte à l'électronique de traitement des informations contenues sur ladite carte.

En l'état actuel de la technique, on utilise un boîtier plat présentant une fente étroite dans laquelle on introduit la carte. Les deux faces de la fente sont constituées pour l'une, par une face du boîtier et,pour l'autre, par un chariot portant des contacts, la largeur de la fente,délimitée par le chariot et le boîtier,étant supérieure à l'épaisseur de la carte.

L'extrémité antérieure du chariot présente une surface d'appui contre laquelle peut buter l'extrémité antérieure de la carte. Dès lors, on comprend qu'en introduisant la carte dans le boîtier il est possible de repousser le chariot En fin de course, à l'aide d'un jeu de rampes, le chariot descend et applique les contacts qu'il porte contre la carte.

La conception de ce boîtier connecteur nécessite l'utilisation de conducteurs électriques souples pour relier les contacts,portés par le chariot, au boîtier avec tous les inconvénients que cela comporte.

Un tel arrangement est représenté par l'appareil connu du document EP-A-0 234 654, où, cependant, la fente d'introduction est complètement formée par le boîter dans lequel est menagé le chariot

US-A-4 236 667 présente un connecteur pour une carte perforée, le connecteur ayant des bras dont la liaison avec un fil solidaire du boîtier est rompue quand ils ne rencontrent pas un trou correspondant dans la carte dans sa position finale. La carte est transportée jusqu'à cette position par un chariot soulevé le long d'une rampe formée par le fond incliné du boîtier quand la carte est insérée.

DE-A-3 531 318 décrit un système à lecture de carte à microcircuits comportant un boîtier creux dans lequel est aménagée une fente d'introduction de carte et un guide de carte pivotant à l'intérieur du boîtier pour établir en fin de course une liaison électrique entre les contacts portés par la carte insérée dans le guide et les contacts électriques portés directement par le boîtier.

L'invention comme définie à la revendication 1 a, notamment, pour but de remédier à ces inconvénients et elle est remarquable en ce que la carte repose sur un chariot, guidé dans le boîtier, dans lequel il peut être déplacé sous l'action de la poussée exercée par l'utilisateur sur la carte,ledit chariot étant susceptible, en fin de course et par l'entremise d'un jeu de rampes,de soulever la carte pour l'appliquer contre des contacts fixes portés par le boîtier.

L'invention sera mieux comprise par la description qui va suivre, faite en se référant au dessin annexé à titre d'exemple indicatif seulement,sur lequel :
La figure 1 est une vue en coupe longitudinale d'un boîtier connecteur conforme à l'invention,les éléments mobiles étant représentés dans une position initiale selon laquelle le contact électrique n'est pas établi;
La figure 2 est une vue analogue à celle 1, montrant la position finale des éléments mobiles lorsque le contact électrique entre la carte et le boîtier est établi.
La figure 3 est une vue en coupe effectuée selon la ligne III-III de la figure 1;
La figure 4 est une vue partielle en perspective du chariot.

En se reportant au dessin, on voit que le boîtier connecteur est constitué par un corps 1, creux et en forme de prisme aplati, présentant sur l'une de ses faces latérales une fente 2 d'introduction d'une carte C à microcircuits.

Dans le corps 1 est logé un chariot 3 présentant à son extrémité antérieure une surface de butée 4 contre laquelle l'extrémité antérieure de la carte C peut prendre appui de la façon usuelle.

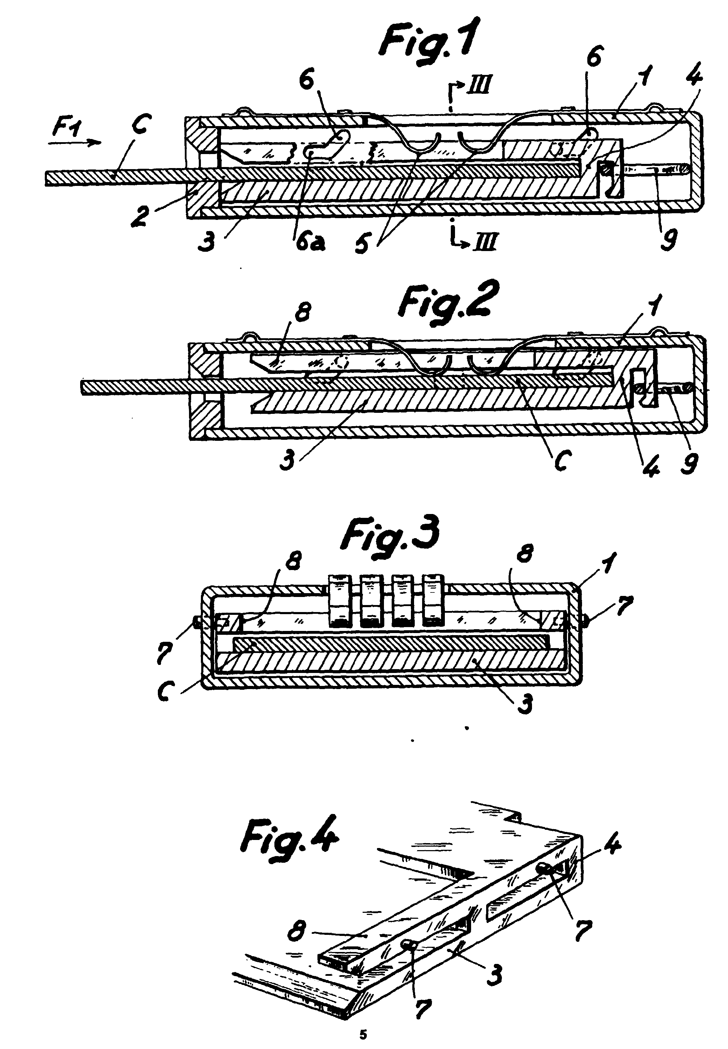

Selon l'invention, les contacts 5 du boîtier sont portés directement par ce dernier et disposés de façon à ce que,lorsqu'on introduit la carte C dans le boîtier,une certaine distance sépare la face supérieure de ladite carte et lesdits contacts, comme cela ressort de la figure 1.

Si , à partir de la position représentée sur la figure 1, on exerce une poussée selon la flèche F1, le chariot se déplace selon la même direction puis, en fin de course, se soulève en entraînant la carte C et en l'appliquant contre les contacts 5.

Selon un mode de réalisation,ce résultat est obtenu par des lumières 6 s'étendant obliquement par rapport à la direction de la poussée et dans lesquelles sont engagés des doigts 7, portés par le chariot 3.

Comme montré sur le dessin, l'extrémité inférieure des lumières 6 peut présenter une partie 6a qui s'étend parallèlement au plan de la carte C.

La carte C est maintenue sur le chariot par deux bras 8, latéraux, s'étendant au-dessus de ce dernier.

Enfin, le rappel du chariot dans sa position initiale, lorsqu' on relâche la carte, est assuré par un ressort 9 tel que par exemple un ressort en épingle.

Bien entendu la présente invention ne se limite pas au mode de réalisation décrit et représenté mais s'étend, au contraire, à toutes variantes de formes et dimensions supportées par la portée des revendications suivantes.

## Revendications

1. Système à lecture de carte à microcircuits comportant des cartes munies de contacts électriques et un connecteur ayant un boîtier creux dans lequel est ménagée une fente d'introduction de carte et un chariot (3) déplaçable par translation dans une direction substantiellement parallèle à la direction d'insertion de la carte, à l'intérieur du boîtier pour établir en fin de course du chariot, une liaison électrique avec les contacts portés par la carte sous l'action d'une poussée exercée sur la carte pour l'introduire dans le boîtier par la fente,
caractérisé en ce que le boîtier porte directement des contacts électriques (5), en ce que la carte à lire repose sur le chariot et en ce que le boîtier et le chariot (3) comportent des moyens coopérants à jeu de rampes pour soulever pendant son déplacement par translation le chariot avec la carte suffisamment pour que les contacts de la carte soient appliqués contre les contacts du boîtier.

2. Système selon la revendication 1, caractérisé en ce que les rampes de soulèvement du chariot (3) comprennent des lumières (6) dont une fraction au moins est oblique par rapport à la direction de la poussée, pratiquées dans les façes latérales du boîtier, dans lesquelles s'engagent des doigts portés par le chariot (3).

3. Système selon la revendication 2, caractérisé en ce que le boîtier comporte quatre lumières ayant chacune une première partie (6a) parallèle à la direction de la poussée et une partie oblique de guidage du chariot vers les contacts électriques (5) du boîtier.

4. Système selon la revendication 1, caractérisé en ce que le jeu de rampes présente une première partie parallèle au plan de la carte (C) reposant sur le chariot et une partie oblique pour soulever la carte parallèlement à elle-même pour l'appliquer contre les contacts fixes.

5. Système selon l'une quelconque des revendications précédentes, caractérisé en ce que le chariot comporte des bras latéraux de maintien de carte, s'étendant au-dessus de la surface sur laquelle repose la carte.

## Patentansprüche

1. System zum Lesen von Karten mit Mikroschaltkreisen, mit Karten, die mit elektrischen Kontakten versehen sind, und mit einem Konnektor, der ein hohles Gehäuse aufweist, in dem ein Einführspalt der Karte ausgebildet ist und mit einem Schlitten (3), der im Inneren des Gehäuses bewegbar ist, um am Ende des Weges des Schlittens eine elektrische Verbindung mit den Kontakten herzustellen, die von der Karte getragen werden unter der Einwirkung eines Drückens auf die Karte, um diese in das Gehäuse durch den Spalt einzuführen,
dadurch gekennzeichnet, daß an dem Gehäuse unmittelbar elektrische Kontakte (5) angebracht sind, daß die zu lesende Karte auf dem Schlitten ruht, und daß das Gehäuse und der Schlitten (3) Kooperationseinrichtungen mit Rampensatz aufweisen, um während des Verschiebens des Schlittens den Schlitten und die Karte ausreichend anzuheben, damit die Kontakte der Karte gegen die Kontakte des Gehäuses gedrückt werden.

2. System nach Anspruch 1, dadurch gekennzeichnet, daß die Anhebungsrampen des Schlittens (3) Schlitze oder Ausnehmungen (6) aufweisen, von denen wenigstens ein Teil schräg verläuft bzgl. der Druckrichtung, die in den seitlichen Seiten des Gehäuses ausgebildet sind, in denen von dem Schlitten (3) getragene Finger in Eingriff sind.

3. System nach Anspruch 2, dadurch gekennzeichnet, daß das Gehäuse vier Ausnehmungen aufweist, die jeweils einen ersten Bereich (6a) parallel zur Drückrichtung und einen schrägen Führungsbereich des Schlittens zu den elektrischen Kontakten (5) des Gehäuses aufweisen.

4. System nach Anspruch 1, dadurch gekennzeichnet, daß der Rampensatz einen ersten Bereich aufweist, der parallel zur Ebene der Karte (C) verläuft, die auf dem Schlitten ruht, und einen schrägen Bereich aufweist, um die Karte parallel zu ihr selbst anzuheben, um sie gegen die festen Kontakte zu drücken.

5. System nach einem der vorhergehenden Ansprüche, dadurch gekennzeichnet, daß der Schlitten seitliche Haltearme der Karte aufweist, die sich oberhalb der Oberfläche erstrecken, auf der die Karte ruht.

## Claims

1. A system for reading microcircuits containing card, comprising cards provided with electric contacts and a connector having a hollow housing formed with a slit for inserting a card and a carriage (3) linearly movable in a direction which is substantially parallel to the direction of insertion of the card inside the housing for generating, at the end of the path of the carriage, an electric connection with the contacts carried by the card, responsive to a thrust exerted on the card for introducing it into the housing through the slit,
characterized in that the housing directly carries electric contacts (5), in that the card to be read rests on the carriage and in that the housing and the carriage (3) have mutually cooperating means including a set of ramps for lifting the carriage during the linear displacement thereof, along with the card, sufficiently for the contacts of the card to be applied against the contacts of the housing.

2. System according to Claim 1, characterised in that the ramps for lifting up the carriage (3) comprise openings (6), at least one fraction of which is oblique with respect to the direction of the thrust, which openings are made in the lateral faces of the casing and in which fingers carried by the carriage (3) are engaged.

3. System according to Claim 2, characterised in that the casing includes four openings each having a first portion (6a) parallel to the direction of the thrust and an oblique portion for guiding the carriage towards the electrical contacts (5) of the casing.

4. System according to Claim 1, characterised in that the set of ramps has a first portion parallel to the plane of the card (C) resting on the carriage and an oblique portion for lifting up the card parallel to itself in order to apply it against the fixed contacts.

5. System according to any one of the preceding claims, characterised in that the carriage includes lateral card-holding arms extending above the surface on which the card rests.
